# EUROPEAN PATENT SPECIFICATION

(11) **EP 3 419 007 B1**
(45) Date of publication and mention of the grant of the patent: **09.11.2022**
(21) Application number: 17193597.6
(22) Date of filing: 27.09.2017
(51) Int. Cl.: G09F 13/16, B60Q 7/00, G09F 15/00, G09F 19/22, E01F 9/692

(54) **WARNING DEVICE**
WARNVORRICHTUNG
DISPOSITIF D'AVERTISSEMENT

(30) Priority: 19.06.2017 CN 201710466802
(43) Date of publication of application: 26.12.2018
(73) Proprietor: Fulian Precision Electronics (Tianjin) Co., Ltd., Tianjin (CN)
(72) Inventor: TSENG, CHUANG-WEI, New Taipei City, Taiwan (CN); CHIEN, YU-CHING, New Taipei City, Taiwan (CN); CHEN, CHE-HSUN, New Taipei City, Taiwan (CN); HUANG, CHI-MING, New Taipei City, Taiwan (CN)
(74) Representative: CMS Cameron McKenna Nabarro Olswang LLP

(56) References cited:
- CN-A- 106 274 667
- CN-U- 203 603 083
- KR-A- 20120 020 887

## Description

### FIELD

The subject matter herein generally relates to a warning device using a foldable driving mechanism. KR20120020887 discloses a warning device according to the prior art.

### BACKGROUND

Rear-end collisions are generally caused by, after a front vehicle is involved in an accident or breakdown, an advance-warning not being promptly given, which causes the vehicles behind to collide with it. The rear-end collisions are also caused by the poor visibility and closeness to the accident scene of the warning equipment of the vehicle involved in the accident, the following vehicles do not have sufficient time or distance do respond. As required by transportation authorities, after a road accident, an advance-warning device, such as a warning triangle, must be used to warn the vehicles behind, at a distance of 100-250 meters. A warning triangle's size may make it difficult to store in a small space. That is, if the length of a trunk lid is shorter than the height of the warning triangle, the triangle cannot be kept in that trunk. Therefore, a foldable warning device is needed.

### BRIEF DESCRIPTION OF THE DRAWINGS

Implementations of the present technology will now be described, by way of example only, with reference to the attached figures.
FIG. 1 is an isometric view of a first exemplary embodiment of a warning device.
FIG. 2 is an isometric view of the warning device of FIG. 1 in another state.
FIG. 3 is an isometric view of a second exemplary embodiment of a warning device.
FIG. 4 is an isometric view of the warning device of FIG. 3 in another state.

### DETAILED DESCRIPTION

A warning device according to the invention is disclosed in claim 1. It will be appreciated that for simplicity and clarity of illustration, where appropriate, reference numerals have been repeated among the different figures to indicate corresponding or analogous elements. In addition, numerous specific details arc set forth in order to provide a thorough understanding of the exemplary embodiments described herein. However, it will be understood by those of ordinary skill in the art that the exemplary embodiments described herein can be practiced without these specific details. In other instances, methods, procedures, and components have not been described in detail so as not to obscure the related relevant feature being described. The drawings are not necessarily to scale and the proportions of certain parts may be exaggerated to better illustrate details and features. The description is not to be considered as limiting the scope of the exemplary embodiments described herein.

Several definitions that apply throughout this disclosure will now be presented.

The term "substantially" is defined to be essentially conforming to the particular dimension, shape, or other feature that the term modifies, such that the component need not be exact. For example, "substantially cylindrical" means that the object resembles a cylinder, but can have one or more deviations from a true cylinder. The term "comprising" means "including, but not necessarily limited to"; it specifically indicates open-ended inclusion or membership in a so-described combination, group, series, and the like.

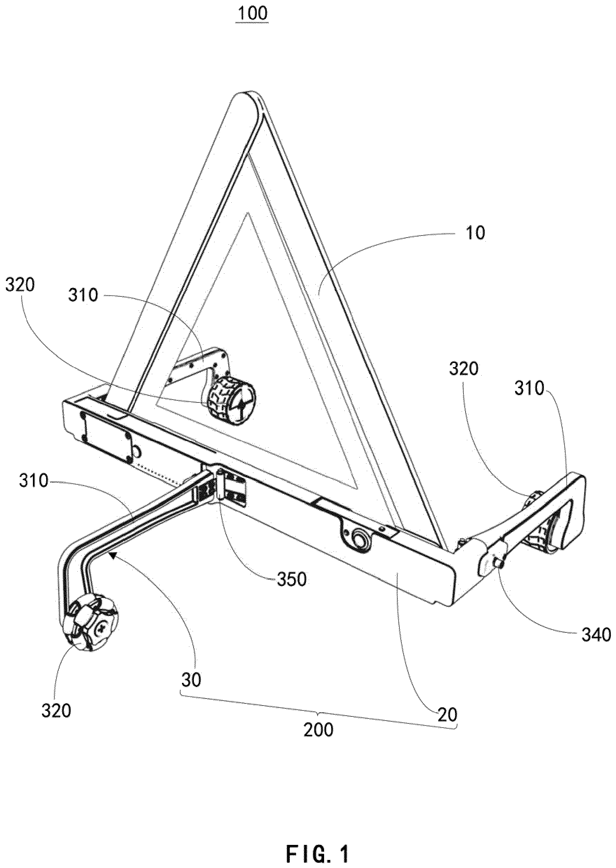

FIGS. 1 to 2 illustrate a warning device 100 according to a first exemplary embodiment of the present application.

The warning device 100 can include a warning sign 10 and a foldable driving mechanism 200. The foldable driving mechanism 200 can include a supporting bracket 20 and three walking units 30.

The three walking units 30 can be mounted to a lower side of the supporting bracket 20, and the warning sign 10 can be mounted to an upper side of the supporting bracket 20. One of the three walking units 30 can be connected to a central portion of a front side of the supporting bracket 20, and the other two walking units 30 can be connected to ends of a rear side of the supporting bracket 20.

The warning sign 20 can be triangle plate covered by reflecting materials, so that the warning sign 20 can reflect light.

Each of the three walking units 30 can include a supporting leg 310, a wheel 320, a fastening unit (not labeled) and a rotating member 350. The wheel 310 is rotatably connected to an end of the supporting leg 310, and the other end of the supporting leg 310 is rotatably connected to the supporting bracket 20 through the rotating member 350.

The supporting leg 310 is rotatable between a folding position, where the supporting leg is folded to the supporting bracket 20, and a walking position (as shown in FIG.1), where the supporting leg 310 is substantially perpendicular to the supporting bracket 20. When the supporting leg 310 is rotated to the walking position, the supporting leg 310 is fastened to the supporting bracket 20 by the fastening unit.

When the supporting leg 310 is rotated to the folding position, the supporting leg 310 can be substantially parallel to the supporting bracket 20 and the supporting leg 310 abuts the supporting bracket 20.

In at least one exemplary embodiment, at least one of the three walking units 30 further includes a driving unit (not shown), the driving unit is drivingly connected to the wheel 320 of the walking unit 30. With the driving unit, the warning device 100 can be self-propelled.

The fastening unit can include a tenon part 330 and a clamping groove 210 coupling with the tenon part 330. The tenon part 330 is installed to the supporting leg 310. The clamping grove 310 is defined on the supporting bracket 20. When the supporting leg 310 is rotated to the walking position, the tenon part 330 is fastened to the clamping groove 310.

For example, the tenon part 330 can be a tenon pole, and the tenon pole is slidably connected to the supporting leg 310. The tenon pole is slidable between a clamping position, where the tenon pole is inserted into the clamping groove 210, and a releasing position, where the tenon pole is separated from the clamping groove 210.

The fastening unit can further include a locking member (not shown). The locking member can be installed to the supporting leg 310 and coupled with the tenon pole. When the tenon pole is inserted into the clamping groove 310, the tennon pole is locked at the clamping position by the locking member.

For example, the locking member can be a spring connected between an end of the tenon pole and the supporting leg 310. When the tenon pole is inserted into the clamping groove 210, the tennon pole is locked at the clamping position by tension of the spring.

The tenon pole can define a handle 340, so that the tenon pole can be moved by hand.

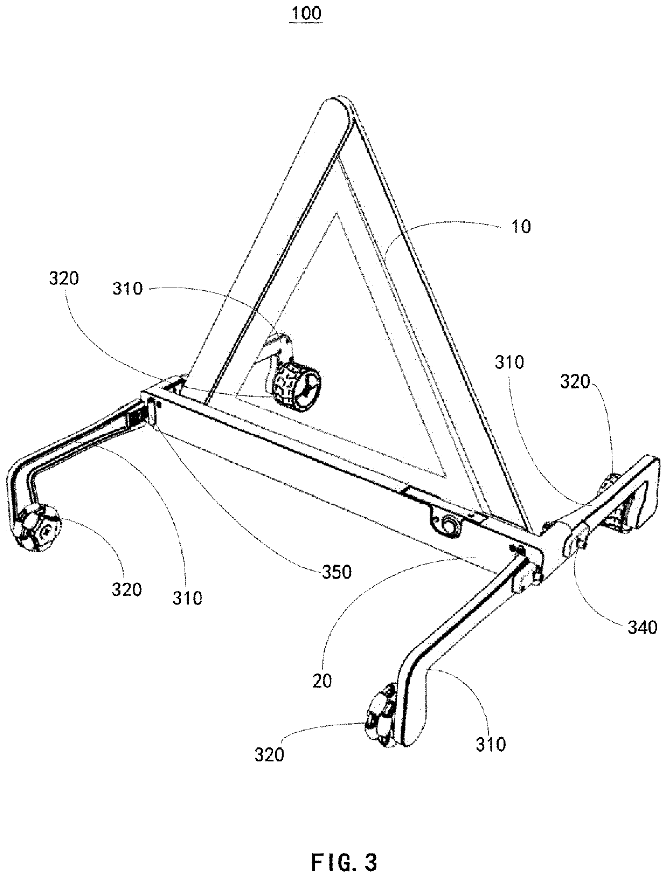

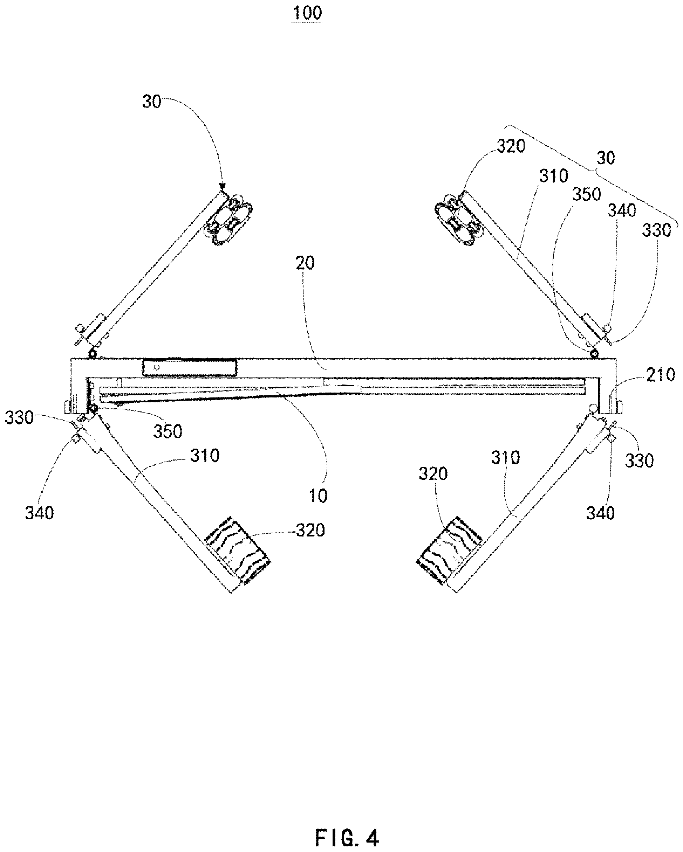

FIGS. 3 to 4 illustrate a warning device 100 according to a second exemplary embodiment of the present application. The differences between warning device 100 in the first exemplary embodiment and the second exemplary embodiment is explained below.

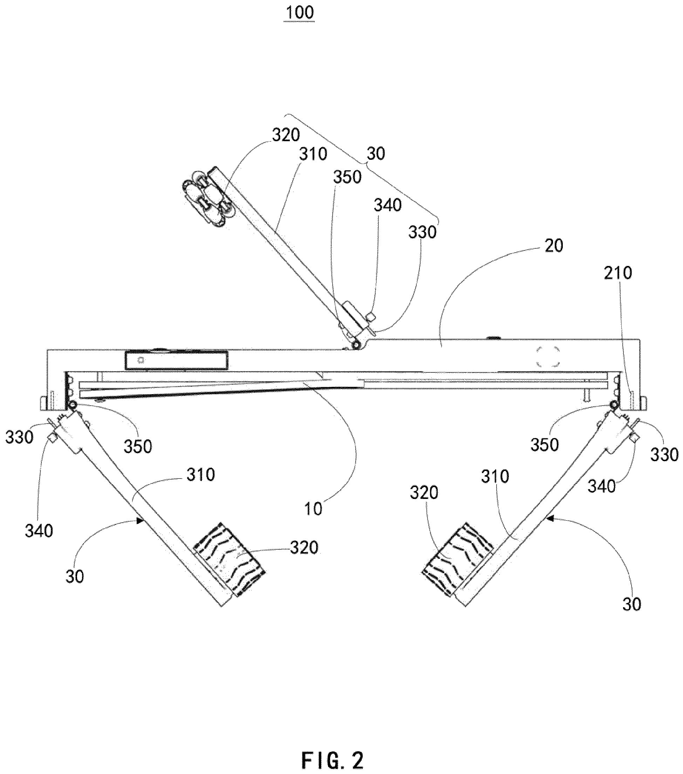

In the second exemplary embodiment, with similar numerals representing similar features in FIGS. 1 and 2, the foldable driving mechanism 200 includes four walking units 30. Two of the four walking units 30 are connected to ends of a front side of the supporting bracket 20, and the other two walking units 30 are connected to ends of a rear side of the supporting bracket 20.

It is understood that the number of the walking units 30 can be other quantities.

The embodiments shown and described above are only examples. Even though numerous characteristics and advantages of the present technology have been set forth in the foregoing description, together with details of the structure and function of the present disclosure, the disclosure is illustrative only, and changes may be made in the details, including matters of shape, size, and arrangement of the parts within the principles of the present disclosure, up to and including the full extent established by the broad general meaning of the terms used in the claims.

## Claims

1. A warning device (100) comprising:
a foldable driving mechanism (200) comprising:
a supporting bracket (20); and
a plurality of walking units (30) mounted to a lower side of the supporting bracket (20), wherein each of the plurality of walking units (30) comprises:
a supporting leg (310) rotatably connected to the supporting bracket (20), the supporting leg (310) being rotatable between a folding position, where the supporting leg (310) is folded to the supporting bracket (20), and a walking position, where the supporting leg (310) is substantially perpendicular to the supporting bracket (20);
a warning sign (10) mounted to an upper side of the supporting bracket (20); the warning sign being covered by reflecting materials;
a wheel (320) rotatably connected to an end of the supporting leg (310); and
a fastening unit comprising:
a tenon part (330) installed to the supporting leg (310), the tenon part (330) being a tenon pole slidably connected to the supporting leg (310);
a clamping groove (210) coupled with the tenon part (330), wherein the clamping groove (210) is defined on the supporting bracket (20), wherein when the supporting leg (310) is rotated to the walking position, the tenon part (330) is locked to the clamping groove (210);
wherein the tenon pole is slidable between a clamping position, where the tenon pole is inserted into the clamping groove (210), and a releasing position, where the tenon pole is separated from the clamping groove (210); and
a locking member installed to the supporting leg (310) and coupled with the tenon pole;
**characterized in that** when the supporting leg (310) is perpendicular to the supporting bracket (20), the tenon pole is inserted into the clamping groove (210) and the tenon pole is locked at the clamping position by the locking member to prevent the supporting leg (310) from rotating with the supporting bracket (20).

2. The warning device (100) of claim 1, wherein when the supporting leg (310) is rotated to the folding position, the supporting leg (310) is substantially parallel to the supporting bracket (20) and abuts the supporting bracket (20).

3. The warning device (100) of claim 1, wherein the warning device (100) comprises three walking units (30), one of the three walking units (30) being connected to a central portion of a front side of the supporting bracket (20); another two walking units (30) being respectively connected to two ends of a rear side of the supporting bracket (20).

4. The warning device (100) of claim 1, wherein the warning device (100) comprises four walking units (30), two of the four walking units (30) being respectively connected to two ends of a front side of the supporting bracket (20); another two walking units (30) being respectively connected to two ends of a rear side of the supporting bracket (20).

5. The warning device (100) of claim 1, wherein at least one of the plurality of walking units (30) further comprises a driving unit, the driving unit being drivingly connected to the wheel (320) of the corresponding walking unit (30).

6. The warning device (100) of claim 1, wherein the locking member is a spring connected between an end of the tenon pole and the supporting leg (310); wherein when the tenon pole is inserted into the clamping groove (210), the tenon pole is locked at the clamping position by pretension force of the spring.

7. The warning device (100) of claim 1, wherein the tenon pole includes a handle (340).

## Patentansprüche

1. Warnvorrichtung (100), umfassend:
einen klappbaren Antriebsmechanismus (200), umfassend:
eine Stützkonsole (20); und
eine Vielzahl von Laufeinheiten (30), die an eine untere Seite der Stützkonsole (20) montiert sind, wobei jede der Vielzahl von Laufeinheiten (30) umfasst:
ein Stützbein (310), das mit der Stützkonsole (20) drehbar verbunden ist, wobei das Stützbein (310) zwischen einer Klappposition, wo das Stützbein (310) an die Stützkonsole (20) geklappt ist, und einer Laufposition, wo das Stützbein (310) zu der Stützkonsole (20) im Wesentlichen senkrecht ist, drehbar ist;
ein Warnzeichen (10), das an eine obere Seite der Stützkonsole (20) montiert ist; wobei das Warnzeichen durch reflektierende Materialien bedeckt ist;
ein Rad (320), das mit einem Ende des Stützbeins (310) drehbar verbunden ist; und
eine Befestigungseinheit, umfassend:
ein Zapfenteil (330), das an dem Stützbein (310) angebracht ist, wobei das Zapfenteil (330) eine Zapfenstange ist, die mit dem Stützbein (310) verschiebbar verbunden ist;
eine Klemmnut (210), die mit dem Zapfenteil (330) gekoppelt ist, wobei die Klemmnut (210) an der Stützkonsole (20) definiert ist, wobei, wenn das Stützbein (310) in die Laufposition gedreht wird, das Zapfenteil (330) an der Klemmnut (210) verriegelt wird;
wobei die Zapfenstange zwischen einer Klemmposition, wo die Zapfenstange in die Klemmnut (210) eingeführt wird, und einer Freigabeposition, wo die Zapfenstange von der Klemmnut (210) getrennt wird, verschiebbar ist; und
ein Verriegelungselement, das an dem Stützbein (310) angebracht ist und mit der Zapfenstange gekoppelt ist;
**dadurch gekennzeichnet, dass**, wenn das Stützbein (310) zu der Stützkonsole (20) senkrecht ist, die Zapfenstange in die Klemmnut (210) eingeführt wird und die Zapfenstange durch das Verriegelungselement an der Klemmposition verriegelt wird, um das Drehen des Stützbeins (310) mit der Stützkonsole (20) zu verhindern.

2. Warnvorrichtung (100) nach Anspruch 1, wobei, wenn das Stützbein (310) in die Klappposition gedreht wird, das Stützbein (310) zu der Stützkonsole (20) im Wesentlichen parallel ist und an der Stützkonsole (20) anliegt.

3. Warnvorrichtung (100) nach Anspruch 1, wobei die Warnvorrichtung (100) drei Laufeinheiten (30) umfasst, wobei eine der drei Laufeinheiten (30) mit einem zentralen Abschnitt einer Vorderseite der Stützkonsole (20) verbunden ist; wobei zwei weitere Laufeinheiten (30) jeweils mit zwei Enden einer Rückseite der Stützkonsole (20) verbunden sind.

4. Warnvorrichtung (100) nach Anspruch 1, wobei die Warnvorrichtung (100) vier Laufeinheiten (30) umfasst, wobei zwei der vier Laufeinheiten (30) jeweils mit zwei Enden einer Vorderseite der Stützkonsole (20) verbunden sind; wobei zwei weitere Laufeinheiten (30) jeweils mit zwei Enden einer Rückseite der Stützkonsole (20) verbunden sind.

5. Warnvorrichtung (100) nach Anspruch 1, wobei mindestens eine von der Vielzahl von Laufeinheiten (30) ferner eine Antriebseinheit umfasst, wobei die Antriebseinheit mit dem Rad (320) der entsprechenden Laufeinheit (30) antriebsfähig verbunden ist.

6. Warnvorrichtung (100) nach Anspruch 1, wobei das Verriegelungselement eine Feder ist, die zwischen einem Ende der Zapfenstange und dem Stützbein (310) verbunden ist; wobei, wenn die Zapfenstange in die Klemmnut (210) eingeführt wird, die Zapfenstange durch Vorspannkraft der Feder an der Klemmposition verriegelt wird.

7. Warnvorrichtung (100) nach Anspruch 1, wobei die Zapfenstange einen Griff (340) beinhaltet.

## Revendications

1. Dispositif d'avertissement (100) comprenant :
un mécanisme d'entraînement pliable (200) comprenant :
un tasseau de support (20) ; et
une pluralité d'unités de marche (30) montées sur un côté inférieur du tasseau de support (20), dans lequel chacune de la pluralité d'unités de marche (30) comprend :
un pied de support (310) relié de manière rotative au tasseau de support (20), le pied de support (310) pouvant tourner entre une position de pliage, dans laquelle le pied de support (310) est replié sur le tasseau de support (20), et une position de marche, dans laquelle le pied de support (310) est sensiblement perpendiculaire au tasseau de support (20) ;
un panneau d'avertissement (10) monté sur un côté supérieur du tasseau de support (20) ; le panneau d'avertissement étant recouvert de matériaux réfléchissants ;
une roue (320) reliée de manière rotative à une extrémité du pied de support (310) ; et
une unité de fixation comprenant :
une partie tenon (330) installée sur le pied de support (310), la partie tenon (330) étant une tige à tenon reliée de manière coulissante au pied de support (310) ;
une rainure de serrage (210) accouplée à la partie tenon (330), dans laquelle la rainure de serrage (210) est définie sur le tasseau de support (20), dans lequel lorsque le pied de support (310) est tourné vers la position de marche, la partie tenon (330) est verrouillée sur la rainure de serrage (210) ;
dans lequel la tige à tenon peut coulisser entre une position de serrage, dans laquelle la tige à tenon est insérée dans la rainure de serrage (210), et une position de libération, dans laquelle la tige à tenon est séparée de la rainure de serrage (210) ; et
un élément de verrouillage installé sur le pied de support (310) et accouplé à la tige à tenon ;
**caractérisé en ce que** lorsque le pied de support (310) est perpendiculaire au tasseau de support (20), la tige à tenon est insérée dans la rainure de serrage (210) et la tige à tenon est verrouillée à la position de serrage par l'élément de verrouillage pour empêcher le pied de support (310) de tourner avec le tasseau de support (20).

2. Dispositif d'avertissement (100) selon la revendication 1, dans lequel lorsque le pied de support (310) est tourné vers la position de pliage, le pied de support (310) est sensiblement parallèle au tasseau de support (20) et vient en butée contre le tasseau de support (20).

3. Dispositif d'avertissement (100) selon la revendication 1, dans lequel le dispositif d'avertissement (100) comprend trois unités de marche (30), l'une des trois unités de marche (30) étant reliée à une partie centrale d'un côté avant du tasseau de support (20) ; deux autres unités de marche (30) étant respectivement reliées aux deux extrémités d'un côté arrière du tasseau de support (20).

4. Dispositif d'avertissement (100) selon la revendication 1, dans lequel le dispositif d'avertissement (100) comprend quatre unités de marche (30), deux des quatre unités de marche (30) étant respectivement reliées aux deux extrémités d'un côté avant du tasseau de support (20) ; deux autres unités de marche (30) étant respectivement reliées aux deux extrémités d'un côté arrière du tasseau de support (20).

5. Dispositif d'avertissement (100) selon la revendication 1, dans lequel au moins l'une de la pluralité d'unités de marche (30) comprend en outre une unité d'entraînement, l'unité d'entraînement étant reliée par entraînement à la roue (320) de l'unité de marche correspondante (30).

6. Dispositif d'avertissement (100) selon la revendication 1, dans lequel l'élément de verrouillage est un ressort relié entre une extrémité de la tige à tenon et le pied de support (310) ; dans lequel lorsque la tige à tenon est insérée dans la rainure de serrage (210), la tige à tenon est verrouillée à la position de serrage par la force de précontrainte du ressort.

7. Dispositif d'avertissement (100) selon la revendication 1, dans lequel la tige à tenon comporte une poignée (340).
